# EUROPEAN PATENT SPECIFICATION

(11) **EP 3 422 186 B1**
(45) Date of publication and mention of the grant of the patent: **30.12.2020**
(21) Application number: 17765653.5
(22) Date of filing: 07.02.2017
(51) Int. Cl.: G06F 11/14, G06F 11/30

(54) **METHOD, DEVICE AND SYSTEM FOR PREVENTING MEMORY DATA LOSS**
VERFAHREN, VORRICHTUNG UND SYSTEM ZUR VERHINDERUNG VON SPEICHERDATENVERLUST
PROCÉDÉ, DISPOSITIF ET SYSTÈME POUR EMPÊCHER LA PERTE DE DONNÉES DE MÉMOIRE

(30) Priority: 17.03.2016 CN 201610154437
(43) Date of publication of application: 02.01.2019
(73) Proprietor: Huawei Technologies Co., Ltd., Longgang District Shenzhen, Guangdong 518129 (CN)
(72) Inventor: DING, Fuhai, Shenzhen Guangdong 518129 (CN)
(74) Representative: Pfenning, Meinig & Partner mbB
(86) International application number: PCT/CN2017/073060
(87) International publication number: WO 2017/157111

(56) References cited:
- CN-A- 101 018 122
- CN-A- 101 702 326
- US-A1- 2005 132 107
- US-A1- 2008 080 603
- US-A1- 2012 203 756
- US-A1- 2013 339 375
- US-B1- 8 370 931

## Description

### TECHNICAL FIELD

This application relates to the field of memory data technologies, and in particular, to a method, apparatus, and system for preventing a loss of memory data.

### BACKGROUND

States of many applications in a distributed system need to be stored in a memory. A quantity of states is large, and the states change frequently. A most severe problem of data in the memory lies in volatility. When a node breaks down, all memory data is lost. Therefore, many solutions are designed to achieve high availability of a system. For example, state data is stored in a physical database or a key-value in-memory database, or a duplicate of state data is maintained in another node of a cluster.

In the field of big data real-time stream processing, a state loss in a memory is equivalent to a message loss. A state management level of the memory directly affects a service type that a system can support. For example, an advertisement recommendation service has a low requirement on the system, and allows a message loss and a message repetition (which corresponds to the service type of at most once); an attack monitoring service in the fields of banks, networks, and anti-terrorism allows a message repetition but not a message loss (which corresponds to the service type of at least once); a finance service requires that the system cannot lose or repeat any message (which corresponds to the service type of exactly once). A big data scenario is further characterized by a large scale. In such scale, a complex technology may not necessarily satisfy a requirement. Therefore, a simple and practical method is urgently needed to satisfy a state management requirement of the memory.

US 2012/203756 A1 describes a pattern matching accelerator (PMA) for assisting software threads to find the presence and location of strings in an input data stream that match a given pattern. The patterns are defined using regular expressions that are compiled into a data structure comprised of rules subsequently processed by the PMA. The patterns to be searched in the input stream are defined by the user as a set of regular expressions. The patterns to be searched are grouped in pattern context sets. The sets of regular expressions which define the pattern context sets are compiled to generate a rules structure used by the PMA hardware. The rules are compiled before search run time and stored in main memory, in rule cache memory within the PMA or a combination thereof. For each input character, the PMA executes the search and returns the search results.

US 2008/080603 A1 describes a method for on-chip detection of data lock and measurement of data lock time in a high-speed serial data link, including: permitting one or more incoming data streams into the high-speed data link; establishing a pattern to be searched in the one or more incoming data streams; comparing patterns in the one or more incoming data streams to a programmable data pattern; holding a repetitive pattern of bits in the one or more incoming data streams by one or more programmable data pattern registers, wherein when one or more occurrences of a byte are detected, an appropriate bit in the one or more programmable data pattern registers is set to indicate the byte's relative position; and filtering false indications in the repetitive pattern by using a byte detection state machine, the state machine controlling and keeping track of a search progress.

In US 8,370,931 B1 multi-behavior matching in a computer system is performed in order to identify suspicious sequences of activities. System behavior is captured using driver hooks. A behavior monitoring system determines the process to which the system behavior belongs by processing a table. This includes using the process ID and thread ID of the system behavior as lookups into the table. A multi-behavior matching algorithm is applied to determine if there is any matching suspicious behavior by matching sets of rules (a policy) to system events caused by a particular process. A state machine is used to keep track of matching policies. Options to the rules and policies (such as "offset," "depth," "distance," "within," "ordered" and "occurrence/interval") are used to refine when a rule or policy is allowed to produce a positive match, reducing false positives.

CN 101018122 A describes a pattern matching processing method, which comprises: performing centralized control and data transmission on a pattern matching database, a pattern matching user and a plurality of pattern matching engines; when the pattern matching user receives a message, selecting a corresponding pattern matching engine according to a pre-set policy for the message from the plurality of pattern matching engines, and transmits the message to the selected pattern matching engine; the pattern matching engine matches the pattern matching rule stored in the database according to the pattern. A pattern matching is performed on the packet; the pattern matching result is returned to the pattern matching user, and the pattern matching user performs a corresponding preset processing flow on the packet according to the pattern matching result.

At present, data stored in a memory is characterized by volatility. A host crash, an operating system fault, and a process restart all may lead to a loss of memory data. For most services, a loss of memory data is unacceptable.

### SUMMARY

Embodiments of the invention of this application provide a method according to claim 1, an apparatus according to claim 5, a computer program product according to claim 11 and a non-transitory computer-readable medium according to claim 12 for preventing a loss of memory data in a big data real-time stream processing application scenario, to improve reliability of memory data.

According to an aspect, an embodiment of this application provides a method for preventing a loss of memory data. The method includes: when starting pattern matching, creating, by a first stream pattern matching engine, a state machine in a memory of the first stream pattern matching engine; in a pattern matching process, obtaining an event from an event storage apparatus in sequence according to a pattern matching rule, where a correspondence that exists between the event storage apparatus and the first stream pattern matching engine is set in a cluster control apparatus; and snapshotting a state of the state machine according to a snapshot rule (for example, every two minutes) to form a snapshot file, and saving the snapshot file in a snapshot storage apparatus, where the snapshot file records the state of the state machine, and the state may be an offset of the obtained event in the event storage apparatus. According to the present invention, in the pattern matching process, the first stream pattern matching engine snapshots the state of the state machine and saves the snapshot file in the snapshot storage apparatus. In this way, memory data is snapshotted. Even if the memory data is lost due to various causes, another equal stream pattern matching engine obtains the snapshot file from the snapshot storage apparatus. In this way, the memory data is obtained again, and the snapshotted memory data can continue to be processed. Therefore, reliability of memory data can be improved, and the memory data is not lost.

In one embodiment, when the first stream pattern matching engine encounters a fault or restarts, the memory data of the first stream pattern matching engine is lost. In this case, a second stream pattern matching engine obtains the snapshot file from the snapshot storage apparatus. After the first stream pattern matching engine encounters a fault, the second stream pattern matching engine is set to be in a correspondence with the event storage apparatus, and the correspondence between the first stream pattern matching engine and the event storage apparatus is abandoned; According to the offset that is of the obtained event in the event storage apparatus and that is recorded in the snapshot file, an event continues to be obtained starting from the offset in the event storage apparatus, to continue pattern matching. The first stream pattern matching engine encounters a fault, and the memory data of the first stream pattern matching engine is lost. However, the memory data of the first stream pattern matching engine is snapshotted to form the snapshot file, and the snapshot file is stored in the snapshot storage apparatus. In this way, the equal second stream pattern matching engine obtains the snapshot file from the snapshot storage apparatus, and may also obtain the memory data to continue to process the snapshotted memory data. Therefore, reliability of memory data can be improved, and the memory data is not lost.

In one embodiment, before an event continues to be obtained starting from the offset in the event storage apparatus, the method further includes: loading the snapshot file into a memory of the second stream pattern matching engine to parse state machine data in the snapshot file; and creating a state machine in the memory of the second stream pattern matching engine according to the state machine data, to connect to the event storage apparatus. This further improves reliability of memory data, and the memory data is not lost.

In one embodiment, when the first stream pattern matching engine encounters a fault, the method further includes: setting, by a cluster control apparatus, a correspondence between the second stream pattern matching engine and the event storage apparatus.

According to another aspect, an embodiment of this application provides an apparatus for preventing a loss of memory data. The apparatus has a function of implementing the first stream pattern matching engine in the foregoing method embodiment. The function may be implemented by using hardware, or may be implemented by using software executed by hardware. The hardware or the software includes one or more modules corresponding to the foregoing functions.

According to still another aspect, an embodiment of this application provides a computer storage medium, configured to store a computer software instruction used by the foregoing first stream pattern matching engine. The computer software instruction includes a program designed for executing the foregoing method embodiment.

According to another aspect, an embodiment of this application provides a system for preventing a loss of memory data, including a first stream pattern matching engine and an event storage apparatus. The first stream pattern matching engine is configured to: when starting pattern matching, create a state machine in a memory of the first stream pattern matching engine; in a pattern matching process, obtain an event from the event storage apparatus in sequence according to a pattern matching rule, where the first stream pattern matching engine and the event storage apparatus are in a correspondence; and snapshot a state of the state machine according to a snapshot rule, to form a snapshot file, and save the snapshot file in a snapshot storage apparatus, where the snapshot file records an offset of the obtained event in the event storage apparatus. The event storage apparatus is configured to: receive an event stream from a stream source, and save the event stream. According to the present invention, in the pattern matching process, the first stream pattern matching engine snapshots the state of the state machine and saves the snapshot file in the snapshot storage apparatus. In this way, the memory data is snapshotted. Even if the memory data is lost due to various causes, another equal stream pattern matching engine obtains the snapshot file from the snapshot storage apparatus. In this way, the memory data is obtained again, and the snapshotted memory data can continue to be processed. Therefore, reliability of memory data can be improved, and the memory data is not lost.

In one embodiment, the system further includes a second stream pattern matching engine. The second stream pattern matching engine is configured to: when the first stream pattern matching engine encounters a fault, obtain the snapshot file from the snapshot storage apparatus, where after the first stream pattern matching engine encounters a fault, the second stream pattern matching engine is set to be in a correspondence with the event storage apparatus, and the correspondence between the first stream pattern matching engine and the event storage apparatus is abandoned; and according to the offset that is of the obtained event in the event storage apparatus and that is recorded in the snapshot file, continue to obtain an event starting from the offset in the event storage apparatus, to continue pattern matching.

In one embodiment, the second stream pattern matching engine is further configured to: before an event continues to be obtained starting from the offset in the event storage apparatus, load the snapshot file into a memory to parse state machine data in the snapshot file; and create a state machine in the memory according to the state machine data, to connect to the event storage apparatus.

In one embodiment, the system further includes a cluster control apparatus, configured to: when the first stream pattern matching engine encounters a fault, set a correspondence between the second stream pattern matching engine and the event storage apparatus.

In one embodiment, the system further includes the snapshot storage apparatus, configured to save the snapshot file.

Compared with the prior art, in the solution provided in the present invention, in the pattern matching process, the first stream pattern matching engine snapshots the state of the state machine and saves the snapshot file in the snapshot storage apparatus. In this way, the memory data is snapshotted. Even if the memory data is lost due to various causes, another equal stream pattern matching engine obtains the snapshot file from the snapshot storage apparatus. In this way, the memory data is obtained again, and the snapshotted memory data can continue to be processed. Therefore, reliability of memory data can be improved, and the memory data is not lost.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a network of a system that prevent a loss of memory data according to an embodiment of the present invention;
FIG. 2 is a schematic diagram of a system for preventing a loss of memory data according to an embodiment of the present invention;
FIG. 3 is a schematic diagram of a computer device according to an embodiment of the present invention;
FIG. 4 is a schematic flowchart of a method for preventing a loss of memory data according to an embodiment of the present invention; and
FIG. 5 is a schematic structural diagram of an apparatus for preventing a loss of memory data according to an embodiment of the present invention.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

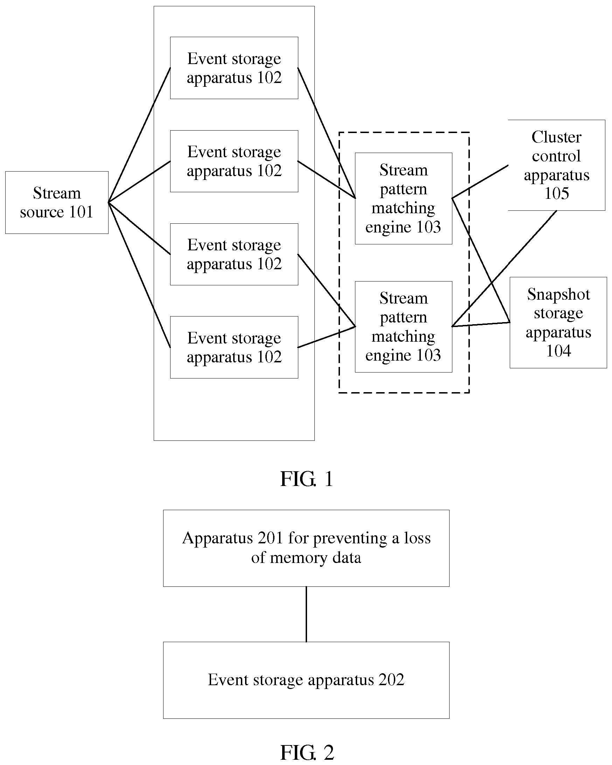

As shown in FIG. 1, FIG. 1 is a simple block diagram of a system for preventing a loss of memory data according to an embodiment of the present invention. The system includes: a stream source 101, an event storage apparatus 102, a stream pattern matching engine 103, a snapshot storage apparatus 104, and a cluster control apparatus 105. The stream source 101 may also be referred to as a producer. The producer generates an event stream and sends the event stream to the event storage apparatus 102. The event storage apparatus 102 may be a message queue persisting the event stream, for example, the event storage apparatus 102 may be software such as a high-throughput distributed message releasing and subscription system Kafka. For efficiency improvement, a plurality of event storage apparatuses 102 exist in the system. Each event storage apparatus 102 is mainly configured to receive an event stream from the stream source and save the event stream. Each event storage apparatus 102 may also be referred to as a partition. For example, FIG. 1 shows four event storage apparatuses 102: a partition 1, a partition 2, a partition 3, and a partition 4. Kafka is not a necessary component in an entire stream processing process, and a backend application may also be connected to the stream source.

The stream pattern matching engine (PME) 103 may obtain data from the event storage apparatus 102, to consume the data and eventually generate a new complex scenario-related event that has a service value. In a processing process, the stream pattern matching engine 103 parses the event, and creates a state machine in a memory to implement logic of a service. Data in the memory is volatile. If the stream pattern matching engine breaks down, numerous state machines in the memory are lost. The stream pattern matching engine 103 may be considered as a consumer and consumes data in Kafka. To reduce load of the stream pattern matching engine 103, there may be a plurality of stream pattern matching engines 103. For example, as shown in FIG. 1, there are two stream pattern matching engines 103.

Specifically, a normal stream pattern matching engine is configured to:
when starting pattern matching, create a state machine in a memory; in a pattern matching process, obtain an event from an event storage apparatus in sequence according to a pattern matching rule; and snapshot a state of the state machine according to a snapshot rule, to form a snapshot file, and save the snapshot file in a snapshot storage apparatus, where the snapshot file records an offset of the obtained event in the event storage apparatus. When the foregoing normal stream pattern matching engine encounters a fault, another normal stream pattern matching engine obtains the snapshot file from the snapshot storage apparatus, where after the stream pattern matching engine encounters a fault, the another normal stream pattern matching engine is set to be in a correspondence with the event storage apparatus;
loads the snapshot file into a memory to parse state machine data in the snapshot file;
create a state machine in the memory according to the state machine data, to connect to the event storage apparatus; and according to the offset that is of the obtained event in the event storage apparatus and that is recorded in the snapshot file, continue to obtain an event starting from the offset in the event storage apparatus, to continue pattern matching.

The cluster control apparatus 105 is connected to all stream pattern matching engines 103. The cluster control apparatus 105 is configured to: control the stream pattern matching engine 103, and set a correspondence between each stream pattern matching engine 103 and each event storage apparatus 102 in the cluster control apparatus 105, and when a stream pattern matching engine encounters a fault or restarts, set a correspondence between another normal stream pattern matching engine and the event storage apparatus.

The snapshot storage apparatus 104 is mainly configured to save the snapshot file.

According to the present invention, in the pattern matching process, a stream pattern matching engine snapshots a state of a state machine and stores a snapshot file in the snapshot storage apparatus. In this way, memory data is snapshotted. Even if the memory data is lost due to various causes, another equal normal stream pattern matching engine obtains the snapshot file from the snapshot storage apparatus. In this way, the memory data is obtained again, and the snapshotted memory data can continue to be processed. Therefore, reliability of memory data can be improved, and the memory data is not lost.

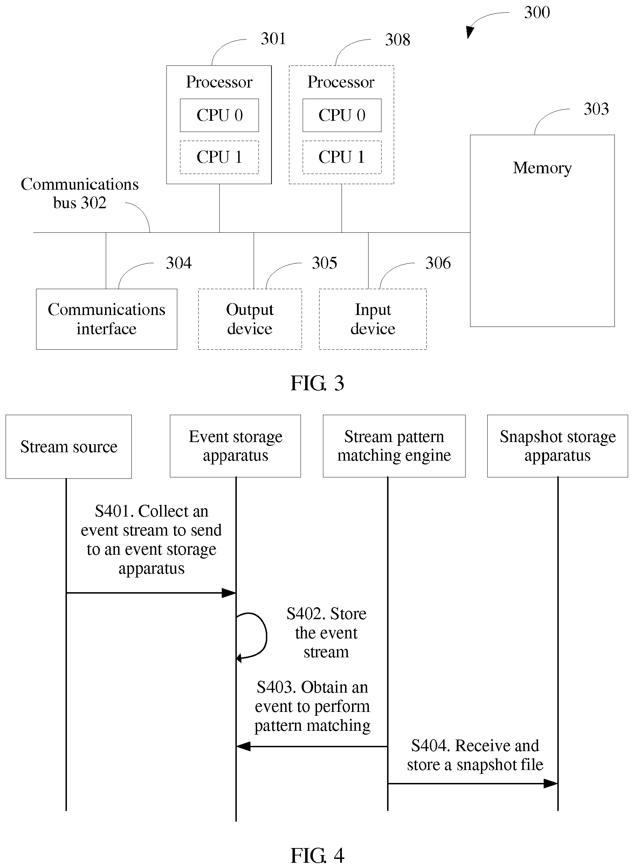

As shown in FIG. 2, a system for preventing a loss of memory data provided in the present invention may include one or more apparatuses 201 for preventing a loss of memory data and one or more event storage apparatuses 202. The apparatus 201 for preventing a loss of memory data herein may be the stream pattern matching engine 103 shown in FIG. 1. As shown in FIG. 2, the apparatus 201 for preventing a loss of memory data shown in FIG. 2 may be implemented in a manner of a computer device (or system) shown in FIG. 3.

FIG. 3 is a schematic diagram of a computer device according to an embodiment of the present invention. A computer device 300 includes at least one processor 301, a communications bus 302, a memory 303, and at least one communications interface 304.

The processor 301 may be a general-purpose central processing unit (CPU), a microprocessor, an application-specific integrated circuit (application-specific integrated circuit, ASIC), or one or more integrated circuits used to control program execution of the solution in the present invention.

The communications bus 302 may include a path in which information is transmitted between the foregoing components. The communications interface 404 is configured to communicate, by using any device of a transceiver type, with another device or communications network such as an Ethernet, a radio access network (RAN), or a wireless local area network (Wireless Local Area Networks, WLAN).

The memory 303 may be a read-only memory (read-only memory, ROM) or another type of static storage device that can store static information and instructions, a random access memory (random access memory, RAM) or another type of dynamic storage device that can store information and instructions; and may also be an electrically erasable programmable read-only memory (Electrically Erasable Programmable Read-Only Memory, EEPROM), a compact disc read-only memory (Compact Disc Read-Only Memory, CD-ROM), or other compact disc storages, optical disc storages (including a compact disc, a laser disc, an optical disc, a digital versatile disc, and a Blu-ray disc, or the like), and a disk storage medium or another disk storage device, or any other medium that can be used to carry or store expected program code that has an instruction or digital structure form and that can be accessed by a computer, which, however, is not limited herein. The memory may exist independently and is connected to the processor by using the bus. The memory may also be integrated with the processor.

The memory 303 is configured to store application program code which executes the solution of the present invention, and the processor 301 controls the execution. The processor 301 is configured to execute the application program code stored in the memory 303.

In specific implementation, as an embodiment, the processor 301 may include one or more CPUs such as a CPU 0 and a CPU 1 in FIG. 3.

In specific implementation, as an embodiment, the computer device 300 may include a plurality of processors such as the processor 301 and a processor 308 in FIG. 3. Each of these processors may be a single-core processor or may be a multi-core processor. The processor herein may be one or more devices, circuits and/or processing cores used to process data (for example, a computer program instruction).

In specific implementation, as an embodiment, the computer device 300 may further include an output device 305 and an input device 306. The output device 305 communicates with the processor 301 and may display information in various manners. For example, the output device 305 may be a liquid crystal display (LCD), a light emitting diode (LED) display device, a cathode ray tube (CRT) display device, a projector, or the like. The input device 306 communicates with the processor 301 and may receive input of a user in various manners. For example, the input device 306 may be a mouse, a keyboard, a touch panel device, a sensor, or the like.

The foregoing computer device 300 may be a general computer device or a special-purpose computer device. In specific implementation, the computer device 300 may be a desktop computer, a portable computer, a network server, a personal digital assistant computer (PDA), a mobile phone, a tablet computer, a wireless terminal device, communication equipment, an embedded device, or a device having a similar structure shown in FIG. 3. A type of the computer device 300 is not limited in this embodiment of the present invention.

The apparatus for preventing a loss of memory data in FIG. 2 may be the device shown in FIG. 3. A memory of the apparatus 201 for preventing a loss of memory data stores one or more software modules. The apparatus 201 for preventing a loss of memory data may implement the software module by using the processor and the program code in the memory, to prevent a loss of memory data.

The following further describes this embodiment of the present invention in detail based on a common aspect of the present invention described above.

As shown in FIG. 4, a process of a method for preventing a loss of memory data according to the present invention includes the following steps.

S401. A stream source collects an event stream, performs partition processing on the event stream, and sends the event stream obtained after the partitioning to an event storage apparatus.

The event stream herein includes continuous tuples. The tuple may be considered as a structurally integral data packet in a specific format. The tuple may be an event. The tuple includes a group of attributes. This group of attibutesmay describe a meaning. For example, one event includes the following four attributes: a calling number, a start time, an end time, and a cell identifier. The stream source is a source network element that can obtain an event stream. Specifically, the stream source may be data collection software. For example, the data collection software may receive signaling by connecting to a socket interface of a signaling machine, or read a call details record file generated by a production environment, and convert the collected signaling or call details record file into an event, to send to the event storage apparatus. For the event storage apparatus, an event may also be considered as a message. The stream source can perform partition processing on an event (or referred to as a message) according to a key value (which may usually be an attribute) of the event and a partition algorithm, and then sends the event to a corresponding event storage apparatus (or referred to as a partition). For example, the key value is a calling number, and the partition algorithm is a consistent hash algorithm. In this case, the stream source performs calculation according to a calling number included in each event and the consistent hash algorithm, assigns each event to a partition, and sends the event to a corresponding event storage apparatus. For example, event streams 1 and 3 are sent to an event storage apparatus 1, and events 2 and 4 are sent to an event storage apparatus 2.

S402. The event storage apparatus receives the event stream sent by the stream source, and persists the event stream into a local disk.

After the event stream is persisted into the local disk, and after an event is consumed by a stream pattern matching engine, the event is not immediately deleted. The event storage apparatus only assigns an offset mark to the currently consumed event, and the offset is used to record a location of the consumed event in the entire event stream. In this way, the stream pattern matching engine continues to consume an event from a location of the offset. The stream pattern matching engine may change the location of the event by adjusting the offset, to repeatedly consume the event or skip some events.

For example, 50 calling events are stored in an event storage apparatus, a stream pattern matching engine reads 25 calling events of the 50 calling events and assigns an offset to the 25^{th} calling event. In this way, next reading starts from the 26^{th} calling event. If repeatedly reading an event is desired, for example, the 24^{th} event needs to be read again, the offset is moved to a location of the 23^{rd} calling event.

S403. When a stream pattern matching engine needs to consume an event stream, the stream pattern matching engine obtains the stored event from the event storage apparatus and parses the event, to generate a matching result according to a series of conditions.

Before this step, the process may further include: A cluster control apparatus sets a correspondence between each stream pattern matching engine and each event storage apparatus according to an algorithm (for example, a load balancing algorithm). Specifically, the cluster control apparatus obtains a total quantity of event storage apparatuses and a total quantity of stream pattern matching engines, and sets in balance a correspondence between a stream pattern matching engine and each event storage apparatus according to a load balancing principle. For example, the total number of event storage apparatuses is four, the total number of stream pattern matching engines is two, and as a result, each stream pattern matching engine is corresponding to two event storage apparatuses. Specifically, a stream pattern matching engine 1 is corresponding to event storage apparatuses 1 and 2. A stream pattern matching engine 2 is corresponding to event storage apparatuses 3 and 4. When the correspondences are successfully set, the stream pattern matching engine 1 reads stored events from the event storage apparatuses 1 and 2, and the stream pattern matching engine 2 reads stored events from the event storage apparatuses 3 and 4. When a stream pattern matching engine fails or encounters a fault, the cluster control apparatus may re-calculate a correspondence between a stream pattern matching engine and each event storage apparatus, and allocate an event storage apparatus corresponding to the stream pattern matching engine that fails or encounters a fault to another normal stream pattern matching engine.

When starting pattern matching, the stream pattern matching engine creates a state machine in a memory of the stream pattern matching engine. When the stream pattern matching engine fails or encounters a fault, the state machine is lost. Therefore, the stream pattern matching engine snapshots a state of the state machine according to a snapshot rule (for example, at an interval), to form a snapshot file, and saves the snapshot file in a snapshot storage apparatus. The snapshot file records an offset that is of an event consumed by the stream pattern matching engine in the event storage apparatus.

The following uses an example to describe this step in detail. For example, the stream pattern matching engine needs to trace a user calling event. When a user makes more than 50 calls in 10 minutes, it is considered that the user may be making malicious calls. In this scenario, the stream pattern matching engine 1 is corresponding to the event storage apparatuses 1 and 2, and the stream pattern matching engine 2 is corresponding to the event storage apparatuses 3 and 4. That is, the stream pattern matching engine 1 obtains events from the event storage apparatuses 1 or 2, and the stream pattern matching engine 2 obtains events from the event storage apparatuses 3 or 4. After obtaining a first calling event of a user from the event storage apparatus 1, the stream pattern matching engine 1 creates a state machine. A timeout period of the state machine is set to 10 minutes. Within the 10 minutes, a quantity is accumulated by 1 after the stream pattern matching engine 1 obtains one calling event from the event storage apparatus 1. When an accumulated quantity exceeds 50, a result is matched. The result is that the user is making malicious calls. The result is reported to a background system (for example, a CRM system), and the background system performs processing according to its own policy. If a quantity of calling events obtained by the stream pattern matching engine 1 within the 10 minutes is less than 50, the state machine is destructed.

Within the 10 minutes, the stream pattern matching engine 1 snapshots a location offset of a read event in an event storage apparatus every 30 seconds. For example, at a moment 1, the stream pattern matching engine 1 reads an event in the event storage apparatus 1, where a current location offset that is read is A, and reads an event in the event storage apparatus 2, where a location offset that is read is X. The stream pattern matching engine 1 starts a timing snapshot, and writes state data in a memory into a snapshot file. The snapshot file records read locations in the event storage apparatus 1 and the event storage apparatus 2, that is, (1, A), and (2, X).

The stream pattern matching engine 1 continues to read events in the event storage apparatus 1 and the event storage apparatus 2. When the stream pattern matching engine 1 consumes an event at a moment 2 (a new snapshot is not performed at this moment), a location offset in the event storage apparatus 1 read by the stream pattern matching engine 1 is B, a location offset in the event storage apparatus 2 is Y. At this time, the stream pattern matching engine 1 suddenly breaks down. When the stream pattern matching engine 1 breaks down, events in the event storage apparatuses 1 and 2 cannot be consumed by the stream pattern matching engine 1, and therefore, event streams transferred by the stream source are always accumulated in the local disk.

At a moment 3, when finding that the fault of the stream pattern matching engine 1 cannot be rectified, the cluster control apparatus instructs the stream pattern matching engine 2 to take over a responsibility of the stream pattern matching engine 1. The stream pattern matching engine 2 loads a last snapshot file generated by the stream pattern matching engine 1 into a memory, parses state machine data in the snapshot file, and creates a state machine in the memory according to the state machine data, thereby implementing snapshot file deserialization in the state machine in the memory. Then, the stream pattern matching engine 2 is connected to the event storage apparatus 1 and the event storage apparatus 2, and separately sets current offsets of consumption data of the event storage apparatus 1 and the event storage apparatus 2 according to offset values recorded in the snapshot file generated at the moment 1. That is, a location in the event storage apparatus 1 is changed from B to A, and a location in the event storage apparatus 2 is changed from Y to X. Then the stream pattern matching engine 2 continues to separately read an event from the location A in the event storage apparatus 1, and continues to read an event from the location X in the event storage apparatus 2.

S404. A snapshot storage apparatus receives a snapshot file that is of a memory and that is sent by the stream pattern matching engine, and saves the snapshot file.

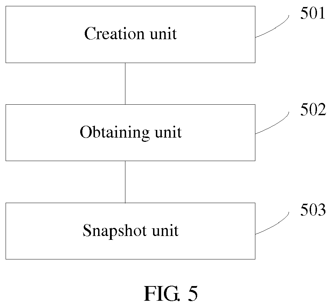

As shown in FIG. 5, an embodiment of the present invention further provides a schematic structural diagram of an apparatus for preventing a loss memory data. An apparatus 500 includes: a creation unit 501, configured to: when pattern matching starts, create a state machine in a memory; an obtaining unit 502, configured to: in a pattern matching process, obtain an event from an event storage apparatus in sequence according to a pattern matching rule; and a snapshot unit 503, configured to snapshot a state of the state machine according to a snapshot rule, to form a snapshot file, and save the snapshot file in a snapshot storage apparatus, where the snapshot file records an offset of the obtained event in the event storage apparatus.

In this embodiment, the apparatus 500 for preventing a loss of memory data is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another device that can provide the foregoing functions. In a simple embodiment, a person skilled in the art may understand that an apparatus for preventing a loss of memory data that may be in the form shown in FIG. 3. The creation unit 501, the obtaining unit 502, and the snapshot unit 503 may be implemented by using the processor and the memory in FIG. 3.

An embodiment of the present invention further provides a computer storage medium, configured to store a computer software instruction used by the apparatus for preventing a loss of memory data shown in FIG. 5. The computer software instruction includes a program designed for executing the foregoing method embodiment. By executing the stored program, the apparatus for preventing a loss of memory data can prevent a loss of memory data.

A person skilled in the art should understand that the embodiments of this application may be provided as a method, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction device. The instruction device implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of this application have been described, a person skilled in the art can make changes and modifications to these embodiments once they learn the basic inventive concept. Therefore, the following claims are intended to be construed as to cover embodiments and all changes and modifications falling within the scope of this application.

Obviously, a person skilled in the art can make various modifications and variations to this application without departing from the scope of this application.

## Claims

1. A method for preventing a loss of memory data, comprising:
receiving an event stream from a stream source for storage in an event storage apparatus;
when a first stream pattern matching engine starts pattern matching, creating a state machine in a memory of the first stream pattern matching engine;
during the pattern matching, obtaining (S403), by the first stream pattern matching engine, an event from the event storage apparatus in sequence according to a pattern matching rule; and
snapshotting (5404) a state of the state machine according to a snapshot rule, to form a snapshot file, and saving the snapshot file in a snapshot storage apparatus, wherein the snapshot file records an offset of the obtained event in the event storage apparatus, wherein the offset is used to record a location of the obtained event in the event stream.

2. The method according to claim 1, wherein when the first stream pattern matching engine encounters a fault, the method further comprises:
obtaining, by a second stream pattern matching engine, the snapshot file from the snapshot storage apparatus, wherein after the first stream pattern matching engine encounters a fault, the second stream pattern matching engine is set to be in a correspondence with the event storage apparatus, and a correspondence between the first stream pattern matching engine and the event storage apparatus is abandoned; and
according to the offset that is of the obtained event in the event storage apparatus and that is recorded in the snapshot file, continuing to obtain an event starting from the offset in the event storage apparatus, to continue pattern matching.

3. The method according to claim 2, wherein before the continuing to obtain an event starting from the offset in the event storage apparatus, the method further comprises:
loading the snapshot file into a memory of the second stream pattern matching engine to parse state machine data in the snapshot file; and
creating a state machine in the memory of the second stream pattern matching engine according to the state machine data, to connect to the event storage apparatus.

4. The method according to claim 2 or 3, wherein when the first stream pattern matching engine encounters a fault, the method further comprises: setting, by a cluster control apparatus, a correspondence between the second stream pattern matching engine and the event storage apparatus.

5. An apparatus for preventing a loss of memory data, comprising a first stream pattern matching engine (103) for pattern matching of events of an event stream stored in an event storage apparatus, wherein
the first stream pattern matching engine (103) is configured to: when starting pattern matching, create a state machine in a memory of the first stream pattern matching engine; during the pattern matching, obtain an event from the event storage apparatus (102) in sequence according to a pattern matching rule, wherein the first stream pattern matching engine (103) and the event storage apparatus (102) are in a correspondence; and snapshot a state of the state machine according to a snapshot rule, to form a snapshot file, and save the snapshot file in a snapshot storage apparatus (104), wherein the snapshot file records an offset of the obtained event in the event storage apparatus (102), wherein the offset is used to record a location of the obtained event in the event stream.

6. A system for preventing a loss of memory data, comprising the apparatus according to claim 5 and the event storage apparatus (102); wherein the event storage apparatus (102) is configured to: receive an event stream from a stream source (101), and save the event stream.

7. The system according to claim 6, further comprising a second stream pattern matching engine (103), wherein the second stream pattern matching engine (103) is configured to: when the first stream pattern matching engine (103) encounters a fault, obtain the snapshot file from the snapshot storage apparatus (104), wherein after the first stream pattern matching engine (103) encounters a fault, the second stream pattern matching engine (103) is set to be in a correspondence with the event storage apparatus (102), and the correspondence between the first stream pattern matching engine (103) and the event storage apparatus (102) is abandoned; and
according to the offset that is of the obtained event in the event storage apparatus (102) and that is recorded in the snapshot file, continue to obtain an event starting from the offset in the event storage apparatus, to continue pattern matching.

8. The system according to claim 7, wherein the second stream pattern matching engine (103) is further configured to: before the continuing to obtain an event starting from the offset in the event storage apparatus (102), load the snapshot file into a memory to parse state machine data in the snapshot file; and create a state machine in the memory according to the state machine data, to connect to the event storage apparatus (102).

9. The system according to claim 7, wherein the system further comprises a cluster control apparatus, configured to: when the first stream pattern matching engine (103) encounters a fault, set a correspondence between the second stream pattern matching engine (103) and the event storage apparatus (102).

10. The system according to claim 7, wherein the system further comprises a distributed apparatus, configured to store a snapshot file.

11. A computer program product comprising instructions which, when executed by a computer, cause the computer to perform the method according to any of the claims 1 to 4.

12. A non-transitory computer-readable media storing computer instructions for creating data structures for parallel programming, that when executed by one or more processors, cause the one or more processors to perform the method according to any of the claims 1 to 4.

## Patentansprüche

1. Verfahren zum Verhindern eines Speicherdatenverlusts, umfassend:
Empfangen eines Ereignisstroms aus einer Stromquelle zum Speichern in einer Ereignisspeichervorrichtung;
wenn eine erste Strommustervergleichsengine mit dem Mustervergleich beginnt, Erzeugen einer Zustandsmaschine in einem Speicher der ersten Strommustervergleichsengine;
während des Mustervergleichs Abrufen (S403) eines Ereignisses aus der Ereignisspeichervorrichtung durch die erste Strommustervergleichsengine in Abfolge gemäß einer Mustervergleichsregel; und
Aufzeichnen einer Momentaufnahme (S404) eines Zustands der Zustandsmaschine gemäß einer Momentaufnahmeregel, um eine Momentaufnahmedatei zu bilden, und
Speichern der Momentaufnahmedatei in einer Momentaufnahmespeichervorrichtung, wobei die Momentaufnahmedatei einen Versatz des abgerufenen Ereignisses in der Ereignisspeichervorrichtung aufzeichnet, wobei der Versatz dazu verwendet wird, eine Position des abgerufenen Ereignisses im Ereignisstrom aufzuzeichnen.

2. Verfahren gemäß Anspruch 1, wobei, wenn die erste Strommustervergleichsengine einen Fehler feststellt, das Verfahren ferner umfasst:
Abrufen der Momentaufnahmedatei aus der Momentaufnahmespeichervorrichtung durch eine zweite Strommustervergleichsvorrichtung, wobei, nachdem die erste Strommustervergleichsvorrichtung einen Fehler festgestellt hat, die zweite Strommustervergleichsengine dazu eingerichtet ist, in Entsprechung mit der Ereignisspeichervorrichtung zu stehen, und eine Entsprechung zwischen der ersten Strommustervergleichsengine und der Ereignisspeichervorrichtung aufgegeben wird; und
gemäß dem Versatz, der sich aus dem abgerufenen Ereignis in der Ereignisspeichervorrichtung ergibt und der in der Momentaufnahmedatei aufgezeichnet ist, weiterhin Abrufen eines Ereignisses ab dem Versatz in der Ereignisspeichervorrichtung, um das Mustervergleichen fortzusetzen.

3. Verfahren gemäß Anspruch 2, wobei das Verfahren vor dem weiteren Erhalten eines Ereignisses ab dem Versatz in der Ereignisspeichervorrichtung ferner umfasst:
Laden der Momentaufnahmedatei in einen Speicher der zweiten Strommustervergleichsengine, um Zustandsmaschinendaten in der Momentaufnahmedatei zu zerlegen; und
Erzeugen einer Zustandsmaschine im Speicher der zweiten Strommustervergleichsengine gemäß den Zustandsmaschinendaten, um eine Verbindung mit der Ereignisspeichervorrichtung herzustellen.

4. Verfahren gemäß Anspruch 2 oder 3, wobei, wenn die erste Strommustervergleichsengine einen Fehler feststellt, das Verfahren ferner umfasst:
Festlegen einer Entsprechung zwischen der zweiten Strommustervergleichsengine und
der Ereignisspeichervorrichtung durch eine Cluster-Steuervorrichtung.

5. Vorrichtung zum Verhindern eines Speicherdatenverlusts, umfassend eine erste Strommustervergleichsengine (103) zum Mustervergleich von Ereignissen eines in einer Ereignisspeichervorrichtung gespeicherten Ereignisstroms,
wobei die erste Strommustervergleichsengine (103) dazu ausgelegt ist: beim Starten des Mustervergleichs eine Zustandsmaschine in einem Speicher der ersten Strommustervergleichsengine zu erzeugen; während des Mustervergleichs ein Ereignis aus der Ereignisspeichervorrichtung (102) in Abfolge gemäß einer Mustervergleichsregel abzurufen, wobei die erste Strommustervergleichsengine (103) und die Ereignisspeichervorrichtung (102) in einer Entsprechung stehen; und eine Momentaufnahme eines Zustands der Zustandsmaschine gemäß einer Momentaufnahmeregel durchzuführen, um eine Momentaufnahmedatei zu bilden, und die Momentaufnahmedatei in einer Momentaufnahmespeichervorrichtung (104) zu speichern, wobei die Momentaufnahmedatei einen Versatz des abgerufenen Ereignisses in der Ereignisspeichervorrichtung (102) aufzeichnet, wobei der Versatz dazu verwendet wird, eine Position des abgerufenen Ereignisses im Ereignisstrom aufzuzeichnen.

6. System zum Verhindern eines Speicherdatenverlusts, umfassend die Vorrichtung gemäß Anspruch 5 und die Ereignisspeichervorrichtung (102), wobei die Ereignisspeichervorrichtung (102) dazu ausgelegt ist: einen Ereignisstrom aus einer Stromquelle (101) zu empfangen und den Ereignisstrom zu speichern.

7. System gemäß Anspruch 6, ferner umfassend eine zweite Strommustervergleichsengine (103), wobei die zweite Strommustervergleichsengine (103) dazu ausgelegt ist: wenn die erste Strommustervergleichsengine (103) einen Fehler feststellt, die Momentaufnahmedatei aus der Momentaufnahmespeichervorrichtung (104) abzurufen, wobei, nachdem die erste Strommustervergleichsengine (103) einen Fehler feststellt hat, die zweite Strommustervergleichsengine (103) dazu eingerichtet ist, in Entsprechung mit der Ereignisspeichervorrichtung (102) zu stehen, und die Entsprechung zwischen der ersten Strommustervergleichsengine (103) und der Ereignisspeichervorrichtung (102) aufgegeben wird; und
gemäß dem Versatz, der sich aus dem abgerufenen Ereignis in der Ereignisspeichervorrichtung (102) ergibt und der in der Momentaufnahmedatei aufgezeichnet ist, weiterhin ein Ereignis ab dem Versatz in der Ereignisspeichervorrichtung abzurufen, um den Mustervergleich fortzusetzen.

8. System gemäß Anspruch 7, wobei die zweite Strommustervergleichsengine (103) ferner dazu ausgelegt ist: vor dem Fortsetzen des Erhaltens eines Ereignisses ab dem Versatz in der Ereignisspeichervorrichtung (102) die Momentaufnahmedatei in einen Speicher zu laden, um Zustandsmaschinendaten in der Momentaufnahmedatei zu zerlegen; und eine Zustandsmaschine im Speicher gemäß den Zustandsmaschinendaten zu erzeugen, um eine Verbindung mit der Ereignisspeichervorrichtung (102) herzustellen.

9. System gemäß Anspruch 7, wobei das System ferner eine Cluster-Steuervorrichtung umfasst, die dazu ausgelegt ist: wenn die erste Strommustervergleichsengine (103) einen Fehler feststellt, eine Entsprechung zwischen der zweiten Strommustervergleichsengine (103) und der Ereignisspeichervorrichtung (102) festzulegen.

10. System gemäß Anspruch 7, wobei das System ferner eine verteilte Vorrichtung umfasst, die zum Speichern einer Momentaufnahmedatei ausgelegt ist.

11. Computerprogrammprodukt, das Anweisungen umfasst, die beim Ausführen durch einen Computer bewirken, dass der Computer das Verfahren gemäß einem der Ansprüche 1 bis 4 durchführt.

12. Nichtflüchtiges computerlesbares Medium, das Computeranweisungen zum Erzeugen von Datenstrukturen für Parallelprogrammierung speichert, die beim Ausführen durch einen oder mehrere Prozessoren bewirken, dass der eine oder die mehreren Prozessoren das Verfahren gemäß einem der Ansprüche 1 bis 4 durchführen.

## Revendications

1. Procédé pour empêcher une perte de données de mémoire, comprenant :
la réception d'un flux d'événement à partir d'une source de flux pour le stockage dans un appareil de stockage d'événement ;
lorsqu'un premier moteur d'assortiment de modèle de flux commence un assortiment de modèle, la création d'une machine d'état dans une mémoire du premier moteur d'assortiment de modèle de flux ;
durant l'assortiment de modèle, l'obtention (S403), par le premier moteur d'assortiment de modèle de flux, d'un événement à partir de l'appareil de stockage d'événement en séquence selon une règle d'assortiment de modèle ; et
la copie instantanée (S404) d'un état de la machine d'état selon une règle de copie instantanée, pour former un fichier de copie instantanée, et la sauvegarde du fichier de copie instantanée dans un appareil de stockage de copie instantanée, dans lequel le fichier de copie instantanée enregistre un décalage de l'événement obtenu dans l'appareil de stockage d'événement, dans lequel le décalage est utilisé pour enregistrer un emplacement de l'événement obtenu dans le flux d'événement.

2. Procédé selon la revendication 1, dans lequel, lorsque le premier moteur d'assortiment de modèle de flux rencontre une défaillance, le procédé comprend en outre :
l'obtention, par un second moteur d'assortiment de modèle de flux, du fichier de copie instantanée à partir de l'appareil de stockage de copie instantanée, dans lequel, après que le premier moteur d'assortiment de modèle de flux rencontre une défaillance, le second moteur d'assortiment de modèle de flux est réglé pour être dans une correspondance avec l'appareil de stockage d'événement, et une correspondance entre le premier moteur d'assortiment de modèle de flux et l'appareil de stockage d'événement est abandonnée ; et
selon le décalage qui est de l'événement obtenu dans l'appareil de stockage d'événement et qui est enregistré dans le fichier de copie instantanée, la continuation de l'obtention d'un événement en commençant à partir du décalage dans l'appareil de stockage d'événement, pour continuer l'assortiment de modèle.

3. Procédé selon la revendication 2, dans lequel, avant la continuation de l'obtention d'un événement en commençant à partir du décalage dans l'appareil de stockage d'événement, le procédé comprend en outre :
le chargement du fichier de copie instantanée dans une mémoire du second moteur d'assortiment de modèle de flux pour analyser des données de machine d'état dans le fichier de copie instantanée ; et
la création d'une machine d'état dans la mémoire du second moteur d'assortiment de modèle de flux selon les données de machine d'état, à connecter à l'appareil de stockage d'événement.

4. Procédé selon la revendication 2 ou 3, dans lequel, lorsque le premier moteur d'assortiment de modèle de flux rencontre une défaillance, le procédé comprend en outre : le réglage, par un appareil de contrôle de grappes, d'une correspondance entre le second moteur d'assortiment de modèle de flux et l'appareil de stockage d'événement.

5. Appareil pour empêcher une perte de données de mémoire, comprenant un premier moteur d'assortiment de modèle de flux (103) pour l'assortiment de modèle d'événements d'un flux d'événement stocké dans un appareil de stockage d'événement, dans lequel
le premier moteur d'assortiment de modèle de flux (103) est configuré pour : lors du commencement de l'assortiment de modèle, créer une machine d'état dans une mémoire du premier moteur d'assortiment de modèle de flux ; durant l'assortiment de modèle, obtenir un événement à partir de l'appareil de stockage d'événement (102) en séquence selon une règle d'assortiment de modèle, dans lequel le premier moteur d'assortiment de modèle de flux (103) et l'appareil de stockage d'événement (102) sont dans une correspondance ; et effectuer une copie instantanée d'un état de la machine d'état selon une règle de copie instantanée, pour former un fichier de copie instantanée, et sauvegarder le fichier de copie instantanée dans un appareil de stockage de copie instantanée (104), dans lequel le fichier de copie instantanée enregistre un décalage de l'événement obtenu dans l'appareil de stockage d'événement (102), dans lequel le décalage est utilisé pour enregistrer un emplacement de l'événement obtenu dans le flux d'événement.

6. Système pour empêcher une perte de données de mémoire, comprenant l'appareil selon la revendication 5 et l'appareil de stockage d'événement (102) ; dans lequel l'appareil de stockage d'événement (102) est configuré pour : recevoir un flux d'événement à partir d'une source de flux (101), et sauvegarder le flux d'événement.

7. Système selon la revendication 6, comprenant en outre un second moteur d'assortiment de modèle de flux (103), dans lequel le second moteur d'assortiment de modèle de flux (103) est configuré pour : lorsque le premier moteur d'assortiment de modèle de flux (103) rencontre une défaillance, obtenir le fichier de copie instantanée à partir de l'appareil de stockage de copie instantanée (104), dans lequel, après que le premier moteur d'assortiment de modèle de flux (103) rencontre une défaillance, le second moteur d'assortiment de modèle de flux (103) est réglé pour être dans une correspondance avec l'appareil de stockage d'événement (102), et la correspondance entre le premier moteur d'assortiment de modèle de flux (103) et l'appareil de stockage d'événement (102) est abandonnée ; et
selon le décalage qui est de l'événement obtenu dans l'appareil de stockage d'événement (102) et qui est enregistré dans le fichier de copie instantanée, continuer d'obtenir un événement en commençant à partir du décalage dans l'appareil de stockage d'événement, pour continuer l'assortiment de modèle.

8. Système selon la revendication 7, dans lequel le second moteur d'assortiment de modèle de flux (103) est en outre configuré pour : avant de continuer d'obtenir un événement en commençant à partir du décalage dans l'appareil de stockage d'événement (102), charger le fichier de copie instantanée dans une mémoire pour analyser des données de machine d'état dans le fichier de copie instantanée ; et créer une machine d'état dans la mémoire selon les données de machine d'état, à connecter à l'appareil de stockage d'événement (102).

9. Système selon la revendication 7, dans lequel le système comprend en outre un appareil de contrôle de grappes, configuré pour : lorsque le premier moteur d'assortiment de modèle de flux (103) rencontre une défaillance, régler une correspondance entre le second moteur d'assortiment de modèle de flux {103) et l'appareil de stockage d'événement (102).

10. Système selon la revendication 7, dans lequel le système comprend en outre un appareil distribué, configuré pour stocker un fichier de copie instantanée.

11. Produit programme d'ordinateur comprenant des instructions qui, lorsqu'elles sont exécutées par un ordinateur, font en sorte que l'ordinateur réalise le procédé selon l'une quelconque des revendications 1 à 4.

12. Support non transitoire lisible par ordinateur stockant des instructions d'ordinateur pour créer des structures de données pour la programmation en parallèle, qui lorsqu'elles sont exécutées par un ou plusieurs processeurs, font en sorte que les un ou plusieurs processeurs réalisent le procédé selon l'une quelconque des revendications 1 à 4.
